# EUROPEAN PATENT SPECIFICATION

(11) **EP 0 362 417 B1**
(45) Date of publication and mention of the grant of the patent: **04.08.1993**
(21) Application number: 88116321.6
(22) Date of filing: 04.10.1988
(51) Int. Cl.: A23L 1/325, A23L 1/33

(54) **Fabricated meat products like crab claw meat and process for manufacturing the same**
Fleischprodukte, wie etwa Krebsscherenfleisch und Verfahren zu ihrer Herstellung
Produits préparés de viande, telle que la viande de pince d'écrevisse, et procédé pour sa préparation

(43) Date of publication of application: 11.04.1990
(73) Proprietor: Yasuno, Shigeo, Tokyo 121 (JP)
(72) Inventor: Yasuno, Shigeo, Tokyo 121 (JP)
(74) Representative: Brandes, Jürgen, Dr. rer. nat.

(56) References cited:
- EP-A- 0 129 790
- EP-A- 0 284 178
- PATENT ABSTRACT OF JAPAN vol.11, no.200 (C-431)(2647), 27th June 1987;
- PATENT ABSTRACTS OF JAPAN vol.8, no93 (C-220)(1530), 27th April 1984;
- PATENT ABSTRACTS OF JAPAN

## Description

### BRIEF DESCRIPTION OF THE INVENTION

### Technical field of the Invention

The present invention relates to a process for manufacturing fabricated meat products like craw claw meat. More specifically, the present invention relates to a process for manufacturing fabricated meat products, which are copies of the claw meat of the king crab (Paralithodes camtschaticus) or giant spider crab.

### Prior Art

Attempts have been done to manufacture fabricated meat products like crab claw meat utilizing method similar to that for manufacturing boiled fish paste like crab leg meat, i. e. so called "Kanikama".

In such a conventional attempt, boiled fish paste is spread in a sheet. Then, slits are formed in the longitudinal direction of the sheet to form a group of continuous fibers. The thus obtained fibers are cut in a direction inclining to the direction of the fibers, and the fibers are gathered together in a bundle shape.

The fibers form layers in the fabricated meat product like crab claw meat manufactured in accordance with the above-described conventional method. Accordingly, it has different mouth feel from that of a natural crab claw meat.

In addition, it is necessary for the gathered fibers to be wrapped around its periphery, otherwise the fibers may easily separated. Accordingly, the conventional fabricated meat like crab meat is not easy to handle. Thus, the conventional fabricated meat product is also different from a natural crab meat in this point.

Japanese Patent Application Laid-open No. Sho 62-22571 discloses a fabricated meat product like crab claw meat and process for manufacturing same: In this laid-open patent application, pasty fish meat food is molded in a form of a crab claw composed of finger part and palm. Then, the molded pasty fish meat is divided into two, and lattice-form cuts are formed in the palm part from the central portion thereof, i.e., the surface where the food is divided, toward the periphery. In this case, the cuts are so controlled that their front ends do not reach the periphery, and accordingly, not cut peripheral portion having a certain thickness is formed along the periphery. Therafter, the divided halves of the food are connected together at the central portion to form a fabricated meat product like crab claw meat.

From JP-A-62-22571 a process for preparing fish meat paste product is known, in which pasty fish meat is moulded first, and cuts in lattice-form are made from the central portion, i.e. the inside portion, to the outer periphery. A product is obtained by connecting the shaped and cut halves at the central surface. Only a portion of the cuts may reach the outer surface, as long as the pasty fish meat is not separated. The depth of cuts must be precisely controlled to remain uncut portion at the periphery.

EP-A-0 129 790 describes a crabmeat-type fish paste product, which contains a number of short fibrous fish meats which are disposed diagonally in a certain direction across the longitudinal direction of the finished product and the individual short fibrous meats are completely separate from each other.

JP-A-62 22572 describes a process for preparing a fish paste product by filling a slit fish paste web on a belt conveyor in a staggered manner, applying longitudinal incisions thereto, forming in the form of a road and cutting desired length.

### Problems to Be Solved by the Invention

The fabricated meat product like crab claw meat thus obtained shows smooth periphery though it has a plurality of radially extending fibrous meat therein, and accordingly, its appearance is still inferior. In addition, mouth feel of the fabricated meat product still does not resemble to that of natural crab claw meat because of smooth peripheral portion of a certain thickness. The smooth peripheral portion is felt first when it is eaten. Further, since the depths of cuts must be controlled in accordance with the peripheral contour so as to form not cut portion, the cutting operation is troublesome.

### Object of the Invention

Taking into consideration the problems inherent to the conventional fabricated meat like crab claw meat, it is an object of the present invention to provide a process for manufacturing fabricated meat products like crab claw meat, which have mouth feel very close to that of a natural crab claw meat and which can be handled easily.

### SUMMARY OF THE INVENTION

The present invention provides a process for manufacturing fabricated meat product (1) mainly comprising ground fish meat and comprising an intermediate portion (2) and a plurality of fibrous portions (3) which extend outwardly from said intermediate portion (2) in a direction substantially normal to said intermediate portion (2), which is characterized in that said process for manufacturing a fabricated meat product (1), which has no substantial layer outside said fibrous portions (3) comprises the steps of:
(1) shaping and heating a product mainly comprising fish meat to form a substantially-flat shaped material (4);
(2) conveying said shaped material (4) to first slitting means (7) which has a saw teeth configuration and which is inclined to the conveying direction and whereby first vertical slits (5) are made from above in the thickness direction to a predetermined depth;
(3) while conveying said shaped material (4), subjecting it to second slitting means (8) which has a saw teeth configuration and which is inclined to the conveying direction and whereby second vertical slits (6) are made from above in the thickness direction to a predetermined depth, transverse to and substantially symmetric with said first slits (5);
(4) turning said shaped material (4) to expose the unslit side;
(5) conveying said shaped material (4) to third slitting means (7') which has a saw teeth configuration and which is inclined to the the conveying direction and whereby third vertical slits (5') are made from above in the thickness direction to a predetermined depth; and
(6) while conveying said shaped material (4), subjecting it to fourth slitting means (8') which has a saw teeth configuration and which is inclined to the conveying direction and whereby fourth vertical slits (6') are aide from above in the thickness direction to a predetermined depth, transverse to and substantially symmetric with said third slits (5'), wherein said shaped material remains connected at said intermediate portion thereof.

A preferred embodiment of the process for manufacturing fabricated meat product (1) is characterized in that said intermediate portion (2) is cut at a desired size together with said fibrous portion (3), after said plurality of said fibrous portions (3) extending outwardly from said intermediate portion (2) have been formed.

In the process of the present invention, when the ground meat mainly comprising fish meat is shaped and heated, the ground meat may be set up before it is heated.

### Function

The present invention allows the manufacture of fabricated meat product like crab meat mainly comprising ground fish meat which fabricated meat comprises:
a thin plate portion; and
a plurality of fibrous portions which extend outwardly from the thin plate portion in a direction substantially normal to the thin plate portion.

Incidentally, natural crab claw meat comprises a cartilage plage and a plurality of fibrous meat. The fibrous meat extends outwardly from the cartilage plate in a direction substantially normal to the cartilage plate. Therefore, the structure of the fabricated meat manufactured according to the present invention closely resembles the structure of natural crab claw meat. Further, the fabricated meat has mouth feel similar to that of natural crab claw meat.

Since the fibrous portion are connected to each other by the thin plate portion, the fabricated meat like crab claw meat manufactured according to the process of the present invention is not separated readily when the fabricated meat is handled. Accordingly, it is very easy for the fabricated meat to be handled.

Furthermore the process of the present invention can be easily automated, if desired.

In addition, in the process for manufacturing the fabricated meat product like crab claw meat of the present invention, shaped material manufactured first by shaping and heating ground meat may be relatively large, and the thin plate portion may be cut at a desired size together with the fibrous portions, after the plurality of the fibrous portions extending outwardly from the thin plate portion have been formed. Thus, the fabricated products of the present invention can be manufactured effectively.

In the process of the present invention, when the ground meat mainly comprising fish meat is shaped and heated, the ground meat may be set up before it is heated. Thus, fabricated meat product having relatively hard mouth feel can be obtained. In some cases, the ground meat may not be set up before it is heated. Thus, fabricated meat product having relatively soft mouth feel can be obtained.

### BRIEF DESCRIPTION OF THE DRAWINGS

The present invention will now be explained in detail with reference to the accompanying drawings, wherein:

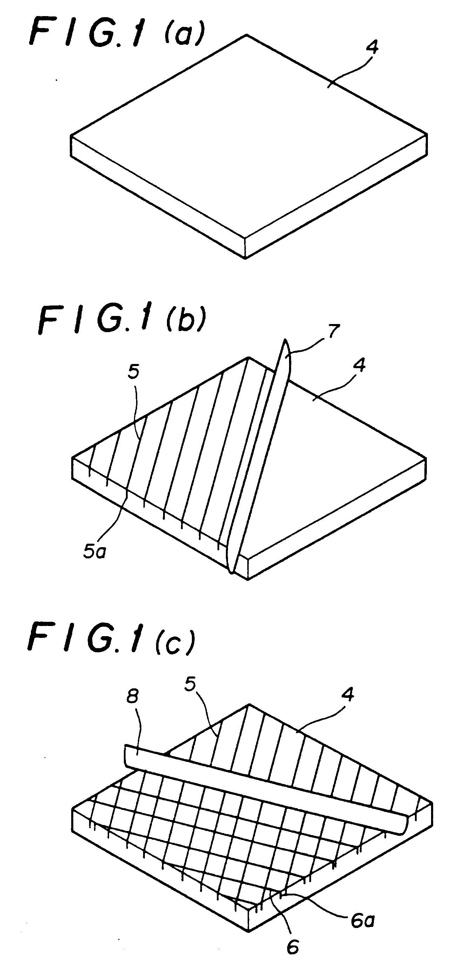

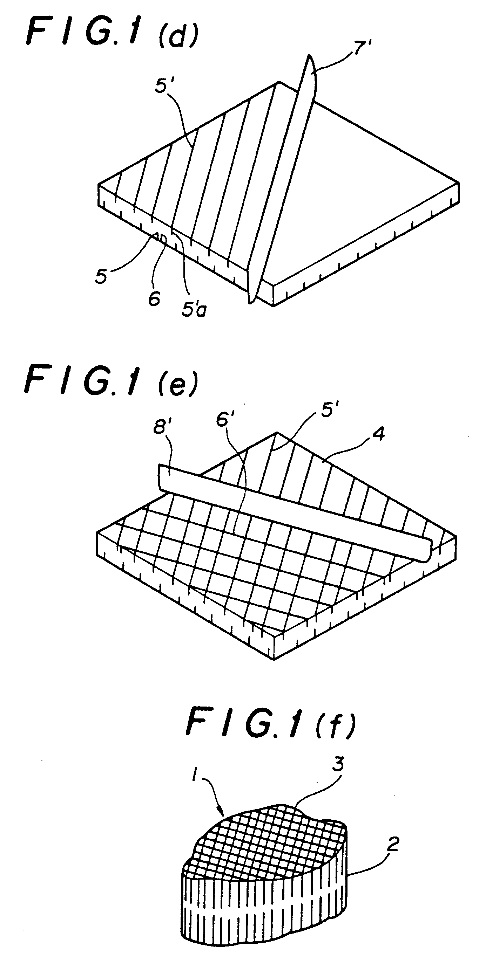

Figs. 1(a) to (f) are perspective views illustrating the process for manufacturing the fabricated meat product like crab claw meat of the present invention.

First, "surimi", i.e., ground fish meat, mainly comprises ground meat of fishes, such as Alaska pollack, while starch, salt, seasoning, flavoring or egg white is preferably added to the ground meat, is shaped in a plate of a desired size, for example, 1 x 1 meter plate with 3 cm thickness. The ground fish meat shaped in a plate is set up at a suitable temperature for a suitable time interval, and thereafter, it is heated to form boiled fish paste, i.e., shaped material 4, of a plate shape as illustrated in Fig. 1(a).

Then, slits 5 are formed in the shaped material 4 at a predetermined distance by means of a thin knife 7. The bottoms 5a (see Fig. 1 (b)) of the slits 5 are set to be before the intermediate of the shaped material 4.

Thereafter, slits 6 transverse to the slits 5 are formed in the thickness direction of the shaped material 4 by means of a thin knife 8. The bottoms 6a (see Fig. 1 (c)) of the slits 6 are also set to be before the intermediate of the shaped material 4. As described above, a plurality of fibrous portions 3 are formed in the front part of the shaped material 4 and fibrous portions 3 extend outwardly.

Then, the shaped material 4 provided with fibrous portions 3 is turned. Slits 5' and 6' are also formed in the rear part of the shaped material 4 by means of thin knives 7' and 8' in a manner similar to that described above as illustrated in Figs. 1 (d) and (e), and the fibrous portions 3 are formed. The portion which has not been cut by the knives 7, 8, 7' and 8' remains in the shaped material 4 as a thin plate portion 2 at the center of the depth as illustrated in Fig. 1 (e).

The thus obtained plate-like shaped material 4 comprises a thin plate portion 2 and fibrous portions 3 extending outwardly from both the sides of the thin plate portion 2 in a direction substantially normal to the thin plate portion 2. Then, the thin plate portion 2 of the plate-like shaped material 4 may be manually torn together with the fibrous portions 3, and as illustrated in Fig. 1 (f), the fabricated meat products 1 like crab claw meat having a desired size are obtained.

Instead of manually tearing the shaped material 4, the shaped material 4 may be cut by a die or sliced by a knife.

In this embodiments, the slits are formed from both the sides of the shaped material 4 to form the fibrous portions 3. However, the slits may be formed only from one side of the shaped material 4 like the embodiment illustrated in Fig.1(d).

Although the cutting ends of the knives 7 and 8 extend straightly in the above-described embodiments, the knives may have saw teeth configuration, i.e, a series of small triangular cutting edges. In this case, front edges of the saw teeth prevents the cut portions from being moved when the knives lower. Accordingly, the fibrous portions 3 are precisely formed.

### ADVANTAGES OF THE INVENTION

The present invention provides fabricated meat which comprises thin plate portion and a plurality of fibrous portions extending outwardly from the thin plate portion. The structure of the fabricated meat product of the present invention closely resembles that of natural crab claw meat, which crab claw meat comprises a cartilage plate and a plurality of fibrous meat, the fibrous meat extending outwardly from the cartilage plate in a direction substantially normal to the cartilage plate.

Further, the fabricated meat of the present invention has mouth feel similar to that of natural crab claw meat.

Since the fibrous portions are connected to each other by the thin plate portion, the fabricated meat like crab claw meat of the present invention are not separated readily when the fabricated meat is handled. Accordingly, it is very easy for the fabricated meat of the present invention to be handled.

Furthermore, the fabricated meat like crab claw meat of the present invention can be continuously and readily manufactured by the process of the present invention. The process can be easily automated.

In addition, in the process for manufacturing the fabricated meat product like crab claw meat of the present invention, shaped material manufactured first by shaping and heating ground meat may be relatively large, and the thin plate portion may be cut at a desired size together with the fibrous portions, after the plurality of the fibrous portions extending outwardly from the thin plate portion have been formed. Thus, the fabricated products of the present invention can be manufactured effectively.

In the process of the present invention, when the ground meat mainly comprising fish meat is shaped and heated, the ground meat may be set up before it is heated. Thus, fabricated meat product having relatively hard mouth feel can be obtained. In some cases, the ground meat may not be set up before it is heated. Thus, fabricated meat product having relatively soft mouth feel can be obtained.

## Claims

1. Process for manufacturing fabricated meat product (1) mainly comprising ground fish meat and comprising an intermediate portion (2) and a plurality of fibrous portions (3) which extend outwardly from said intermediate portion (2) in a direction substantially normal to said intermediate portion (2), characterized in that said process for manufacturing a fabricated meat product (1), which has no substantial layer outside said fibrous portions (3) comprises the steps of:
(1) shaping and heating a product mainly comprising fish meat to form a substantially flat shaped material (4);
(2) conveying said shaped material (4) to first slitting means (7) which has a say teeth configuration and which is inclined to the conveying direction and whereby first vertical slits (5) are made from above in the thickness direction to a predetermined depth;
(3) while conveying said shaped material (4), subjecting it to second slitting means (8) which had a saw teeth configuration and which is inclined to the conveying direction and whereby second vertical slits (6) are made from above in the thickness direction to a predetermined depth, transverse to and substantially symmetric with said first slits (5);
(4) turning said shaped material (4) to expose the unslit side;
(5) conveying said shaped material (4) to third slitting means (7') which has a saw teeth configuration and which is inclined to the the conveying direction and whereby third vertical slits (5') are made from above in the thickness direction to a predetermined depth; and
(6) while conveying said shaped material (4), subjecting it to fourth slitting means (8') which had a saw teeth configuration and which is inclined to the conveying direction and whereby fourth vertical slits (6') are made from above in the thickness direction to a predetermined depth, transverse to and substantially symmetric with said third slits (5'), wherein said shaped material remains connected at said intermediate portion thereof.

2. A process for manufacturing fabricated meat product (1) according to claim 1, characterized in that said intermediate portion (2) is cut at a desired size together with said fibrous portions (3), after said plurality of said fibrous portions (3) extending outwardly from said intermediate portion (2) have been formed.

## Patentansprüche

1. Verfahren zur Herstellung von vorgefertigten Speiseprodukten (1), die hauptsächlich aus vermahlenem Fischfleisch bestehen und einen Zwischenabschnitt (2) aufweisen und eine Mehrzahl von faserigen Abschnitten (3), die sich von dem Zwischenabschnitt (2) nach außen in im wesentlichen lotrechter Richtung zu dem Zwischenabschnitt (2) erstrecken, dadurch gekennzeichnet, daß das Verfahren zur Herstellung eines vorgefertigten Speiseproduktes (1), das praktisch keine Schicht außerhalb der faserigen Abschnitte (3) aufweist, die folgenden Stufen umfaßt:
(1) Verformen und Erhitzen eines Produktes, das hauptsächlich aus Fischfleisch besteht in ein Material (4), das eine praktisch flache Form aufweist;
(2) Transportieren des geformten Materials (4) zu einem ersten Schneidmittel (7) mit einer Sägezahnkonfiguration, das in Transportrichtung geneigt ist, wodurch erste vertikale Schlitze (5) von oben in Dickenrichtung bis zu einer vorbestimmten Tiefe erzeugt werden;
(3) Behandlung des geformten Materials (4), während dieses transportiert wird, mit einem zweiten Schneidmittel (8) mit einer Sägezahnkonfiguration, das in Transportrichtung geneigt ist, wodurch zweite vertikale Schlitze (6) von oben in Dickenrichtung bis zu einer bestimmten Tiefe quer und praktisch symmetrisch zu den ersten Schlitzen (5) erzeugt werden;
(4) Umdrehen des vorgeformten Materials (4) unter Freilegung der nicht geschlitzten Seite;
(5) Transportieren des geformten Materials (4) zu einem dritten Schneidmittel (7') mit einer Sägezahnkonfiguration, das zur Förderrichtung geneigt ist und wodurch dritte vertikale Schlitze (5) von oben in Dickenrichtung bis zu einer vorbestimmten Tiefe erzeugt werden; und
(6) Behandeln des geformten Materials (4), während dieses transportiert wird, mit einem vierten Schneidmittel (8') mit einer Sägezahnkonfiguration, das in Transportrichtung geneigt ist, wodurch vierte vertikale Schlitze (6') von oben in Dickenrichtung bis zu einer vorbestimmten Tiefe quer und praktisch symmetrisch zu den dritten Schlitzen (5') erzeugt werden, wobei das geformte Material mit dem Zwischenabschnitt verbunden bleibt.

2. Verfahren zur Herstellung eines vorgefertigten Speiseproduktes (1) nach Anspruch 1, dadurch gekennzeichnet, daß der Zwischenabschnitt (2) zu einer vorbestimmten Größe mit den faserigen Abschnitten (3) zerschnitten wird, nachdem die Mehrzahl der faserigen Abschnitte (3), die sich von dem Zwischenabschnitt (2) nach außen erstrecken, erzeugt worden sind.

## Revendications

1. Procédé de préparation d'un produit de viande préparé (1) comprenant principalement de la viande de poisson broyée et comprenant une partie intermédiaire (2) et une pluralité de parties fibreuses (3) qui s'étendent vers l'extérieur à partir de ladite partie intermédiaire (2) dans une direction substantiellement normale par rapport à ladite partie intermédiaire (2), caractérisé en ce que le procédé de préparation d'un produit préparé de viande (1), qui n'a substantiellement pas de couche à l'extérieur desdites parties fibreuses (3) comprend les étapes consistant à :
(1) mettre en forme et chauffer un produit comprenant principalement de la viande de poisson afin de former un matériau formé substantiellement plat (4);
(2) transporter ledit matériau formé (4) vers premier moyen de fente (7) ayant une configuration en dent de scie et qui est incliné dans le sens du transport, ce qui a pour effet que des premières fentes verticales (5) sont faites depuis le dessus dans le sens de l'épaisseur jusqu'à une profondeur pré-déterminée;
(3) tout en transportant ledit matériau formé (4), le soumettre à un deuxième moyen de fente (8) qui a une configuration en dent de scie est qui est incliné dans le sens du transport, ce qui a pour effet que des deuxièmes fentes verticales (6) sont faites depuis le dessus dans le sens de l'épaisseur jusqu'à une profondeur pré-déterminée, en position transversale et substantiellement symétrique par rapport auxdites premières fentes (5);
(4) tourner ledit matériau formé (4) afin d'exposer le côté non fendu;
(5) transporter ledit matériau formé (4) vers un troisième moyen de fente (7') qui a une configuration en dent de scie et qui est incliné dans le sens du transport, ce qui a pour effet que des troisièmes fentes verticales (5') sont faites dans le sens de l'épaisseur jusqu'à une profondeur pré-déterminée ; et
(6) tout en transportant ledit matériau formé (4), le soumettre à un quatrième moyen de fente (8') qui a une configuration en dent de scie est qui est incliné dans le sens du transport, ce qui a pour effet que des quatrièmes fentes verticales (6') sont faites depuis le dessus dans le sens de l'épaisseur jusqu'à une profondeur pré-déterminée, en position transversale et substantiellement symétrique par rapport auxdites troisièmes fentes (5'), dans lequel ledit matériau formé reste relié au niveau de ses dites parties intermédiaires.

2. Un procédé de préparation d'un produit de viande préparé (1) selon la revendication 1, caractérisé en ce que ladite partie intermédiaire (2) est coupée à une taille souhaitée en même temps que les parties fibreuses (3) après que ladite pluralité desdites parties fibreuses (3) s'étendant vers l'extérieur à partir de ladite partie intermédiaire (2) ait été formée.
